# EUROPÄISCHE PATENTSCHRIFT

(11) **EP 3 080 408 B1**
(45) Veröffentlichungstag und Bekanntmachung des Hinweises auf die Patenterteilung: **27.03.2019**
(21) Anmeldenummer: 15704232.6
(22) Anmeldetag: 29.01.2015
(51) Int. Cl.: F01K 3/18, F28D 20/00

(54) **VERFAHREN ZUM BETREIBEN EINES ENERGIESPEICHERS**
METHOD FOR OPERATING AN ENERGY STORE
PROCÉDÉ PERMETTANT DE FAIRE FONCTIONNER UN ACCUMULATEUR D'ÉNERGIE

(30) Priorität: 07.02.2014 DE 102014202266
(43) Veröffentlichungstag der Anmeldung: 19.10.2016
(73) Patentinhaber: Siemens Aktiengesellschaft, 80333 München (DE)
(72) Erfinder: TREMEL, Alexander, 91096 Möhrendorf (DE); LENK, Uwe, 08064 Zwickau (DE)
(86) Internationale Anmeldenummer: PCT/EP2015/051807
(87) Internationale Veröffentlichungsnummer: WO 2015/117885

(56) Entgegenhaltungen:
- EP-A1- 1 071 915
- US-A- 4 054 126

## Beschreibung

In heute verwendeten großtechnischen Wärmespeicherkonzepten, die auf sensibler und/oder latenter Wärmespeicherung beruhen, ist die Wärmespeicherdichte eher gering. Zudem sorgen Wärmeverluste für eine Beschränkung der Wärmespeicherdauer. Eine verlustarme Wärmespeicherung in einem Feststoff mit hoher Energiedichte auf Basis von thermo-chemischen Effekten ermöglicht hingegen die großtechnische Wärmespeicherung über längere Zeit. Eine mögliche Anwendung ist die Entkopplung von Strom- und Wärmeprodukten in Kraft-Wärme-Kopplungsanlagen (KWK).

Bei thermo-chemischen Wärmespeichern muss gleichzeitig ein Wärme- und Stoffübergang mit dem Feststoff stattfinden. Die dazu gehörigen Reaktorkonzepte und Verfahren sind daher teils aufwendig und befinden sich noch im Labor- und Pilotmaßstab.

Die Dokumente US4054126 A und EP1071915 A1 offenbaren thermo-chemische Wärmespeicher.

Die Kombination eines thermischen Kraftwerkes mit einem thermischen Speicher wird bereits in der WO 2012/150969 A1 beschrieben. Hier wird ein thermischer Speicher einer Gasturbine nachgeschaltet, um die Gasturbine immer bei Volllast betreiben zu können und die Last dies Dampfkreislaufs variieren zu können.

Thermische Speicher (vor allem flüssige Salze) sind bei solarthermischen Kraftwerken Stand der Technik.

Die Aufgabe der Erfindung besteht darin, ein Verfahren bereitzustellen, das die thermo-chemische Wärmespeicherung in großtechnischem Maßstab möglich macht. Dabei sollen Wärmespeicherkonzepte sowohl in einer stationären als auch in einer mobilen Form verwendbar sein und das verwendete Speichermedium möglichst kostengünstig und einfach handhabbar sein.

Die Lösung der Aufgabe besteht in einem Verfahren zum Betreiben eines Energiespeichers nach Patentanspruch 1.

Das Verfahren zum Betreiben eines Energiespeichers nach Anspruch 1 umfasst folgende Schritte:
Zunächst wird ein Speichermaterial, das mit Wasser eine exotherme Reaktion eingeht, in einen Etagenofen eingebracht. Ferner wird in diesen Etagenofen ebenfalls Luft und Wasser eingebracht. Hierbei wird das Speichermaterial im Etagenofen mit der Luft im Gegenstrom geführt. Die Luft wird also von einer entgegengesetzten Seite in den Etagenofen eingebracht, wie das Speichermaterial. Im Etagenofen kommt es zu einer exothermen Reaktion zwischen dem Speichermaterial und dem Wasser, wobei ein Produkt aus dem Speichermaterial und dem Wasser entsteht. Durch die Energie, die bei der exothermen Reaktion zwischen Speichermaterial und dem Wasser frei wird, wird die Luft erhitzt. Die erhitzte Luft wird in einen Wärmeübertrager eingeleitet und durch die von der Luft übertragene Wärme wird ein Arbeitsmedium erhitzt oder ein Prozess direkt beheizt.

Hierbei seien folgende Erläuterungen zu den verwendeten Begriffen gegeben: Das Speichermaterial ist wie das Wasser ein Edukt der exothermen Reaktion, die zusammen zu dem Produkt reagieren. Da das nicht wässrige Edukt dieser Reaktion jedoch chemische Energie speichert, die es während der exothermen Reaktion abgibt, wird dieses Edukt als Speichermaterial bezeichnet. Das in der Reaktion entstehende Produkt kann und hierauf wird noch eingegangen werden, durch Einbringen externer Energie wieder zu dem Speichermaterial übergeführt werden. Es handelt sich hier also im Idealfall um einen reversiblen Prozess, der beispielsweise nach der Reaktion

CaO + H₂O ↔ Ca(OH)₂

abläuft. In diesem Beispiel ist das Kalziumoxid (CaO) das Speichermaterial und das Edukt der exothermen Reaktion. Das Kalziumhydroxid Ca(OH)₂ ist hingegen das Produkt der exothermen Reaktion. Das Wasser kann dabei in verschiedenen Aggregatzuständen in den Etagenofen zur Reaktion zugeführt werden. Zum einen ist es möglich, dass die Luft, die erhitzt wird, einen hohen Feuchtigkeitsanteil aufweist. Somit kann bereits genügend Wasser durch die Luftfeuchtigkeit für die exotherme Reaktion zur Verfügung stehen. Wie noch im Weiteren beschrieben wird, gibt es jedoch noch mehrere Möglichkeiten, Wasser insbesondere in Form von Dampf der Reaktion zuzuführen.

Die Erfindung weist mehrere Vorteile auf. Zum einen ist es möglich, großtechnisch ein kostengünstiges, beliebig verfügbares Speichermaterial zu verwenden, das wiederum auch einen hohen Energiebetrag pro Volumen und pro Masse speichern kann. Es ist jeweils das bereits erwähnte Kalziumoxid als Speichermaterial genannt, es kann jedoch auch in günstiger Weise Magnesiumoxid oder ein sogenannter Dolomit verwendet werden. Dies sind alles Mineralien, die großtechnisch günstig verfügbar sind. Es können aber auch Karbonate des Kalziums oder des Magnesiums sowie Oxide oder Karbonate des Eisens, des Kupfers, des Bariums, des Natriums, des Kaliums oder des Nickels oder Mischungen hieraus auch in unreiner Form verwendet werden.

Durch die exotherme Reaktion können Temperaturen zwischen 150°C und 600°C erreicht werden, was dazu führt, dass das Arbeitsmedium ebenfalls in diesen Temperaturbereich aufgeheizt werden kann. Daher ist das Arbeitsmedium grundsätzlich in der Lage, Turbinen zur Stromgenerierung zu betreiben. Das Arbeitsmedium kann in aufgeheizter Form Wärme zur Beheizung von Räumen und Gebäuden bereitstellen. Das erhitzte Arbeitsmedium kann somit für eine Vielzahl von unterschiedlichen Anwendungen eingesetzt werden. Als Arbeitsmedium kommt im wesentlichen Wasser in Betracht, insbesondere bei niedrigeren Temperaturen kann auch ein anderes Arbeitsmedium mit einer möglichst hohen Wärmekapazität auch auf organischer Basis z.B. zum Betreiben einer Organic Rankine Cycle Anlage verwendet werden.
In einer weiteren Ausgestaltungsform der Erfindung ist das Arbeitsmedium wie besagt Wasser, wobei im Wärmeübertrager Wasserdampf erzeugt wird, der teilweise wieder im Etagenofen eingeführt wird. Je nachdem, welche Feuchtigkeit die Luft, die in den Etagenofen eingebracht wird, hat, kann es zweckmäßig sein, zur Aufrechterhaltung der exothermen Reaktion, zusätzliches Wasser auch bei hohen Temperaturen, also insbesondere Wasserdampf in den Etagenofen einzubringen.

Damit auch die Luft genügend Feuchtigkeit aufweist, kann sie vor dem Einbringen in den Etagenofen in einer vorteilhaften Ausgestaltungsform durch einen Sättiger geleitet werden, in dem sie mit Wasser angereichert wird.

In einer weiteren vorteilhaften Ausgestaltungsform der Erfindung wird Abwärme aus einem thermischen Prozess genutzt, um Wasser zu erwärmen, bevor es in den Etagenofen eingeführt wird. Hierfür ist insbesondere Abwärme zweckmäßig, die nicht ausreichend ist, um Wasser so heiß zu machen, dass selbständig eine Turbine mit dem Wasserdampf betrieben werden kann.

In einer weiteren Ausgestaltungsform der Erfindung wird feuchtes Abgas aus einem hydrothermischen Prozess in den Etagenofen eingeleitet. In vielen thermischen und industriellen Prozessen entsteht Wasserdampf, das Abgas ist stark mit Wasser angereichert, was ebenfalls zur Speisung des Etagenofens und der darin ablaufenden exothermen Reaktion zweckmäßig nutzbar ist. Insbesondere ist die Abluft in einem Kühlturm eines Kraftwerkes für den Betrieb und die Zuführung in den Etagenofen und zum Ablauf der exothermen Reaktion zweckmäßig.

In einer weiteren Ausgestaltungsform der Erfindung ist es zweckmäßig, dass die Luft nach dem Abgeben von thermischer Energie im Wärmeübertrager erneut dem Etagenofen zugeführt wird. Dies ist deshalb zweckmäßig, weil die Luft auch nach dem Durchlaufen des Wärmeübertragers in der Regel noch eine Temperatur aufweist, die deutlich höher als Raumtemperatur ist und somit als bereits vorgewärmte Luft wieder in den Etagenofen eingebracht werden kann.

Zum Aufladen des Speichermediums ist es zweckmäßig, das Produkt als in dem bereits genannten Beispiel das Kalziumhydroxid auf ein Temperaturniveau zu erhitzen, auf dem eine Rückreaktion zum Edukt durch Abspaltung von Wasser erfolgt. Somit handelt es sich um einen reversiblen Prozess, der es ermöglicht, mit verhältnismäßig wenig Speichermaterial auszukommen.

Das Erhitzen des Produktes auf das notwendige Temperaturniveau kann auf verschiedene Weise erfolgen. Vorteilhaft ist eine Nutzung eines Abgasstromes aus einem thermischen Kraftwerk, insbesondere einer Gasturbine, wobei der Abgasstrom nach Erhitzen des Produktes mit Wasser angereichert ist, das bei der Umwandlung des Produktes in Edukt und Wasser frei wird. Dieser mit Wasser angereicherte Abgasstrom kann in zweckmäßigerweise wiederum in einen Dampferzeuger eines thermischen Kraftwerkes, beispielsweise im Falle eines Gas- und Dampfturbinenkombinationskraftwerkes (GUD-Kraftwerk) in den Dampferzeuger eingeleitet werden. Somit wird der Abgasstrom der Gasturbine lediglich - und gegebenenfalls auch nur teilweise - umgeleitet, um das Produkt entsprechend aufzuheizen und die Rückreaktion, eine endotherme Reaktion, ablaufen zu lassen.

Alternativ dazu kann das Erhitzen des Produktes auch durch eine herkömmliche Widerstandsbeheizung mit elektrischem Strom erfolgen, was insbesondere dann zweckmäßig ist, wenn in einem Stromnetz überschüssige Energie, insbesondere durch regenerative Energien, wie Windkraft und Solarenergie vorhanden ist. Der dabei freiwerdende Wasserdampf kann kondensiert und die Kondensationswärme zur Wärmeversorgung verwendet werden.

Weitere vorteilhafte Ausgestaltungsformen und weitere Merkmale der Erfindung werden anhand der folgenden Figuren näher erläutert. Dabei handelt es sich lediglich um Ausführungsbeispiele, die keine Einschränkung des Schutzbereiches darstellen. Weiterhin werden Merkmale, die in unterschiedlichen Ausgestaltungsformen angewandt werden, jeweils mit denselben Bezugszeichen versehen.

Dabei zeigen:
- FIG 1: einen Energiespeicher mit einem Etagenofen und einem Wärmeübertrager,
- FIG 2: einen Energiespeicher nach FIG 1 mit variierter Wasserzufuhr zum Etagenofen,
- FIG 3: ebenfalls einen Energiespeicher nach FIG 1 mit ebenfalls geänderter Wasserzufuhr zum Etagenofen gegenüber FIG 1 und 2,
- FIG 4: einen Energiespeicher in einen Modus zur Rückreaktion (Lademodus), in dem das Speichermedium mit chemischer Energie aufgeladen wird in Anordnung in einem GUD-Kraftwerk,
- FIG 5: einen chemischen Energiespeicher analog zu FIG 4 mit geänderter Abgasstromführung und
- FIG 6: einen Energiespeicher im Lademodus mit elektrischer Widerstandsbeheizung.

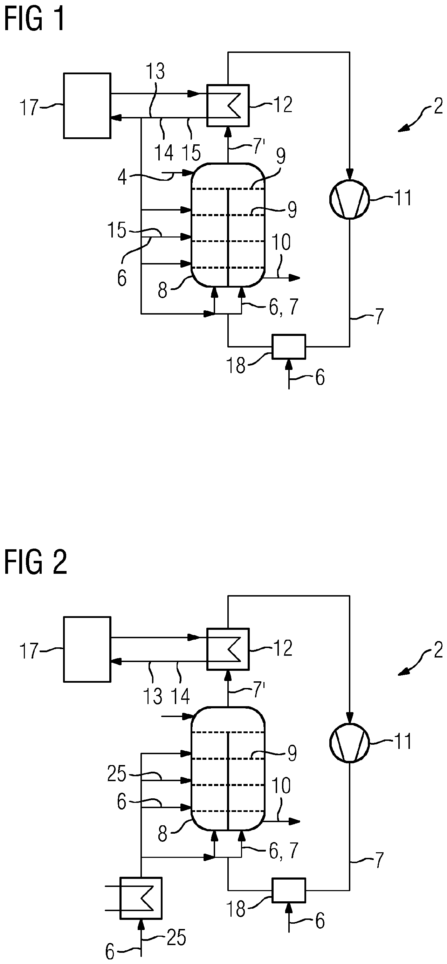

In FIG 1 ist ein elektrochemischer Energiespeicher dargestellt, der insbesondere einen Etagenofen 8 umfasst, der wiederum mehrere Etagen 9 aufweist. In diesem Etagenofen 8 wird ein Speichermedium 4, beispielsweise Kalziumoxid eingebracht, das Speichermedium 4 kann in verschiedenen Formen eingebracht werden, es kann beispielsweise in Pellets gepresst sein, kann jedoch auch in Pulverform dargestellt sein. Das pulverförmige oder gepresste Speichermedium 4 wird über die Etagen 9, die langsam rotieren, nach und nach nach unten befördert. Von der gegenüberliegenden Seite des Etagenofens 8 wird Luft 7, die insbesondere in einem Sättiger 18 mit Wasser 6 angereichert ist, in den Etagenofen eingeführt. Dem Sättiger kann neben Wasser auch Abwärme auf einem Temperaturniveau von kleiner 100°C zugeführt werden, um eine hohe Wasserdampfkonzentration in der Luft zu erreichen. Die eingeführte feuchte Luft 7 bewegt sich somit bezüglich des Speichermediums 4 im Gegenstrom im Etagenofen 8. Beim Zusammentreffen der Luft 7 und dem Wasser 6 mit dem Speichermedium 4 kommt es zu einer exothermen Reaktion, die beispielhaft in der folgenden Gleichung dargestellt ist:

CaO + H₂O → Ca(OH)₂

Alternativ können beispielsweise auch Magnesiumoxid als Speichermaterial 4 verwendet werden, was nun zu qualitativ folgenden Reaktionen führen würde:

MgO + H₂O → Mg(OH)₂

Bei der genannten Reaktion entsteht als Reaktionsprodukt ein Hydroxid oder auch je nach Beschaffenheit des Speichermediums 4 ein Hydrogenkarbonat, das als Produkt 10 bezeichnet wird. Das Produkt 10 wird im unteren Bereich des Etagenofens 8, in Nähe des Einlasses der Luft 7 wieder aus dem Etagenofen 8 entnommen. Das Produkt 10 wird in einem separaten Behälter gespeichert und kann bei Bedarf wieder erhitzt werden und zum Edukt bzw. zum Speichermaterial 4 zurückgeführt werden. Auf diesen Prozess wird im Weiteren noch eingegangen.

Je nach Reaktionsführung kann die Luft 7 durch Aufnahme von Wärme, die bei der Reaktion zwischen dem Speichermaterial 4 und dem Wasser 6 frei wird, auf Temperaturen zwischen 150°C und 600°C aufgeheizt werden. Die erhitzte Luft 7' wird aus dem Etagenofen 8 ausgeleitet und in einen Wärmeübertrager 12, auch Wärmetauscher genannt, eingeführt. Im Wärmeübertrager 12 wird ein Arbeitsmedium 13 durch die erhitzte Luft 7' erhitzt, wobei die Luft 7' wieder abgekühlt wird. Der in der FIG 1 dargestellte Wärmeübertrager 12 ist sehr vereinfacht und schematisch dargestellt, grundsätzlich können hier auch komplexe Schaltungen mit Mehrdrucksystemen für eine effiziente Übertragung der Wärme aus der erhitzten Luft 7' angeordnet sein. Als Arbeitsmedium bietet sich im wesentlichen Wasser an, das bei den angegebenen Temperaturen in der Regel in Dampfform vorliegt. Dieser Wasserdampf 14 kann grundsätzlich dazu direkt verwendet werden, mechanische Arbeit zu verrichten, beispielsweise kann hiermit eine Turbine angetrieben werden. Das Arbeitsmedium 13, das auch über mehrere Wärmetauscherkreisläufe grundsätzlich auch eine geringere Temperatur aufweisen kann, also die bei der exothermen Reaktion auftritt, kann grundsätzlich auch für Wärmeübertragung auf Heizmedien, beispielsweise einem Heizungssystem in einem Gebäude angewendet werden. Auch die indirekte Übertragung des Wasserdampfes zur Umsetzung von mechanischer Arbeit ist zweckmäßig. Beispielsweise kann der Wasserdampf 14 einem Dampferzeuger eines thermischen Kraftwerkes zugeführt werden, und erst im Weiteren eine Turbine eines thermischen Kraftwerkes 20 antreiben. Auf diese Ausgestaltungsform wird noch eingegangen werden. Aus diesem Grund wird der Kasten 17 in FIG 1 ganz allgemein als Wärmenutzung der bei der exothermen Reaktion im Etagenofen 8 auftretenden Wärme bezeichnet. Durch diesen allgemeinen Begriff der Wärmenutzung 17 soll die vielfältige Möglichkeit zur Nutzung der erzeugten thermo-chemischen Energie in Form von Wärmeenergie veranschaulicht werden.

Der Dampf 14, der der Wärmenutzung 17 zugeführt wird, kann auch teilweise noch abgeleitet werden, wobei er dabei als Dampf 15 bezeichnet wird. Dieser heiße Dampf 15 kann ebenfalls zweckmäßig gegebenenfalls über mehrere Etagen 9 dem Etagenofen 8 zugeführt werden, um die exotherme Reaktion zwischen dem Speichermaterial 4 und dem Wasser 6 bzw. hier vorliegend in Form von Wasserdampf 15 anzuheizen. Dies ist dann zweckmäßig, wenn die feuchte Luft 7 nicht ausreichend Wasser 6 enthält, um die Reaktion in der entsprechenden geforderten Aktivität zu betreiben. Die zugegebene Wasserdampfmenge kann auch zur Regelung der Temperatur im Etagenofen eingesetzt werden.
Des Weiteren kann es zweckmäßig sein, die Luft 7, wenn sie aus dem Wärmeübertrager 12 austritt, und noch nicht auf Raumtemperatur abgekühlt ist, über ein Gebläse 11 wieder in den Etagenofen 6 einzuführen. Dies hat den Vorteil, dass die Luft 7 in dem Fall eine gewisse Wärmemenge beinhaltet und nicht von Raumtemperatur auf die genannte Reaktionstemperatur hoch geheizt werden muss. Somit wird eine höhere Austrittstemperatur der Luft 7' erzielt.

In FIG 2 ist nahezu die gleiche Vorrichtung dargestellt, wie sie auch in FIG 1 beschrieben ist. In FIG 2 wird lediglich eine Besonderheit bei der zusätzlichen Zufuhr von Wasser 6 zu den einzelnen Etagen 9 des Etagenofens 8 beschrieben. Diese ist dann zweckmäßig, wenn Abwärme auf einem Temperaturniveau zur Verfügung steht, auf der ein Dampf nur auf niedrigem Druckniveau erzeugt werden kann. Dies ist insbesondere dann der Fall, wenn Abwärme bei Temperaturen von 100°C oder höher vorliegt. Dieser Niederdruckdampf wird dann der Luft 7 vor Eintritt in den Etagenofen 8 zugegeben oder er kann entlang des Etagenofens 8 in Form von Niederdruckdampf 25 eingespeist werden.

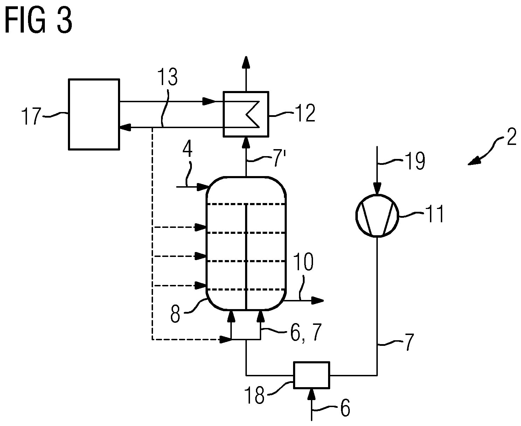

In FIG 3 ist ebenfalls ein analoges Beispiel zu den Figuren 1 und 2 gegeben. Hier wird jedoch bereits feuchtes und warmes Abgas 19, beispielsweise aus einem Kühlturm eines Kraftwerkes oder aus einem anderen hydrothermischen Prozess dem Etagenofen 8 zugeführt. Das Einführen des feuchten Abgases 19 in einen Sättiger 18 und das zusätzliche Zufügen von Wasser 6 ist hierbei selbstverständlich optional, und abhängig von dem Feuchtegehalt des feuchten Abgases 19. Grundsätzlich können selbstverständlich alle in den Figuren 1 bis 3 beschriebenen Zuführmethoden von Wasser 6 bzw. Wasserdampf 15, 25 und heißes feuchtes Abgas 19 beliebig mit den Anforderungen bzw. den zur Verfügung stehenden Möglichkeiten kombiniert werden.

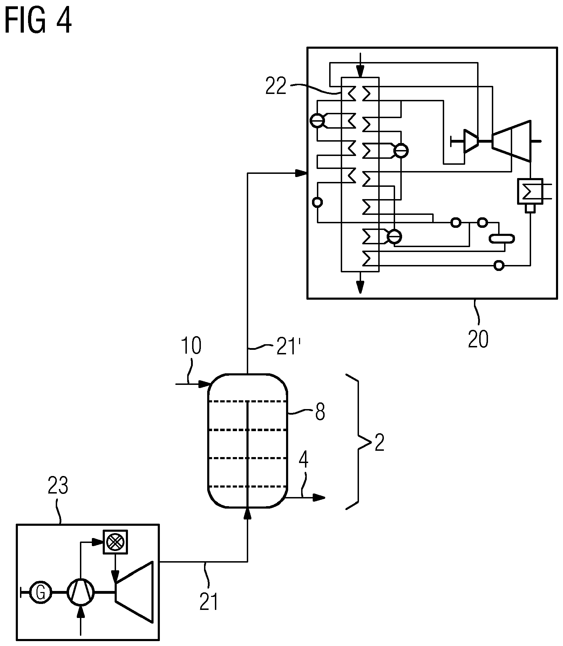

In den Figuren 4 bis 6 werden nun Verfahrensalternativen zur Umkehrung der exothermen Reaktion beschrieben. Hierbei wird das Produkt 10 unter Aufwendung von thermischer Energie wieder in das Edukt bzw. in das Speichermaterial 4 zurückverwandelt, wobei Wasser bei diesem Prozess frei wird. Um das bereits eingangs gegebene Beispiel von Kalziumoxid als Speichermedium 4 wieder aufzugreifen, erfolgt die Umwandlung des Produktes 10 in das Edukt schematisch nach folgender Beispielgleichung:

Ca(OH)₂ → CaO + H₂O (endotherm)

Da es, wie bereits erwähnt, sich bei dieser Gleichung um eine endotherme Reaktion handelt, muss entsprechend Energie zugeführt werden, damit die Gleichung in der vorgegebenen Richtung abläuft. Hierzu gibt es verschiedene Möglichkeiten, die insbesondere darauf beruhen, Abwärme oder überschüssige Energie entsprechend zu nutzen, um diese in einen thermo-chemischen Speicher zu speichern.

In FIG 4 ist schematisch ein thermisches Kraftwerk, hier in Form eines Gas- und Dampfturbinenkraftwerkes (GUD) dargestellt. Die Besonderheit an dieser Darstellung liegt darin, dass ein Abgasstrom 21, der aus einer Gasturbine 23 entweicht, zur Aufheizung des Produktes 10 im Etagenofen 8 dient und dabei das Edukt bzw. das Speichermedium 4, beispielsweise in Form von Kalziumoxid entsteht. Das so rückgewonnene Speichermedium 4 soll bevorzugt in luftabgeschlossenen Lagerstätten gelagert werden, damit keine Luftfeuchtigkeit die exotherme Reaktion wieder anregen könnte. Das heiße Abgas 28, das den Etagenofen 8 verlässt, hat entsprechend Wasser aufgenommen, das das Produkt 10 bei der Rückreaktion abgegeben hat. Das somit wasserangereicherte heiße Abgas 21' wird einem Dampferzeuger 22 eines Dampfkraftwerkes 20 zugeführt. Das Dampfkraftwerk 20, in dem eine Dampfturbine angetrieben wird, ist zusammen mit der Gasturbine 23 Bestandteil des GUD-Kraftwerkes. Durch die Zwischenschaltung des Etagenofens zwischen der Gasturbine 23 und dem Dampfkraftwerk 20 und die somit erfolgende Wärmeabgabe an das Speichermedium führt dazu, dass dem Dampferzeuger Energie entzogen wird. Die Wärmeabgabe bei der Einspeicherung führt daher zu einer geringeren Stromproduktion im Dampfturbinenteil des Gas- und Dampfturbinenkraftwerkes. Dies kann jedoch gewünscht sein, wenn beispielsweise im Stromnetz weniger elektrische Leistung benötigt wird und das GUD-Kraftwerk weiterhin in einem optimalen Arbeitsmodus betrieben werden soll. Durch diese Maßnahme, also durch das Einspeichern von Energie in einen thermo-chemischen Energiespeicher wird die Abgabe von elektrischer Energie durch das Kraftwerk reduziert, andererseits kann diese Energie, die in den Energiespeicher geflossen ist, bei Spitzenbedarf im Stromnetz kurzfristig, wie beispielsweise zu den Figuren 1 bis 3 beschrieben, abgerufen werden und ins Netz eingespeist werden.

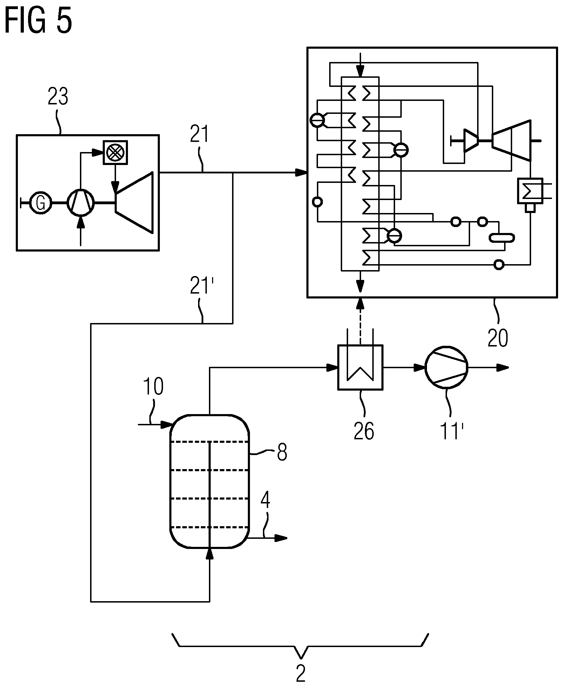

Ein Laden des Speichermaterials 4 ist auch durch die teilweise Entnahme von heißem Abgas aus einem thermischen Kraftwerk, hier wieder in FIG 5 beispielhaft in Form eines GUD-Kraftwerkes ausgestaltet, möglich. Ein Teil des heißen Abgases 21, das hier als 21' bezeichnet wird und eine Temperatur von 500°C bis 700°C aufweist, wird der Gasturbine 23 entnommen und dem Etagenofen 8 bzw. bzw. dem Energiespeicher 2 zugeführt. Am Austritt des Etagenofens 8 ist das Abgas immer noch heiß und kann daher in einem Kühler 26 abgekühlt werden. Die Wärme, die der Kühler 26 aufnimmt, kann optional dem Dampferzeuger 22 zugeführt werden, um die Stromproduktionsverluste am Dampfkraftwerk 20 zu minimieren. Ein Gebläse 11' am Ausgang des Abgaskanals wird verwendet, um gezielt die gewünschte Menge an Abgas nach der Gasturbine 23 zu entnehmen und den Druckverlust des Ofens 8 zu überwinden.

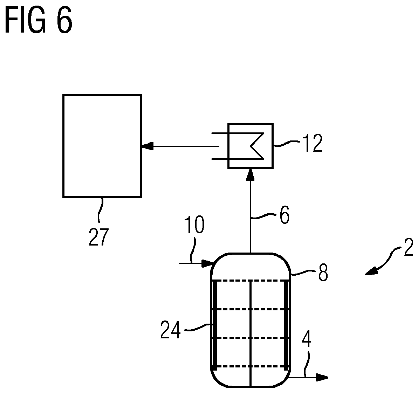

Eine weitere Möglichkeit, die Rückreaktion vom Produkt 10 zum Speichermedium 4 anzuregen, liegt in der elektrischen Widerstandsbeheizung des Etagenofens 8. Dieses Reaktionsschema ist in FIG 6 veranschaulicht. Es ist hier sehr vereinfacht dargestellt. Diese recht einfache Aufbereitungsmethode des Produktes 10 ist insbesondere dann zweckmäßig, wenn überschüssige Energie aus dem Stromnetz, die beispielsweise durch regenerative Energien hervorgerufen wird, zur Verfügung stehen und diese zwischengespeichert werden muss. Hierzu bietet sich der beschriebene thermo-chemische Energiespeicher in vorteilhafter Weise an. Die elektrische Beheizung mit der Widerstandsbeheizung 24 ist auch dann von praktischer Bedeutung, wenn ein Warmwasserspeicher z.B. ein Fernwärmenetz vorhanden ist. Der Dampf, der im Ofen entsteht und der von der Abspaltung des Wassers aus dem Produkt herrührt, kann in diesem Fall energetisch durch eine Wärmerückgewinnungseinheit genutzt werden. Dort wird der Wasserdampf kondensiert und weiter gekühlt. Die abgegebene Wärme kann von dem Warmwasserspeicher aufgenommen werden. Durch die Einkopplung der Wärme in den Warmwasserspeicher steigt die Effizienz des Prozesses.

Die Effizienz des Wärmespeicherverfahrens soll anhand einer konzeptionellen Berechnung gezeigt werden. Hierfür sei wieder das Beispiel Speichersystem Kalziumoxid-Kalziumhydroxid gewählt. Unter der Annahme, dass das Speichermaterial nach Ausführungsbeispiel gemäß FIG 6 elektrisch beladen wird, ist beim Verbrauch einer elektrischen Energiemenge von 2,8 MJ mit der Produktion von 1 kg Kalziumoxid zu rechnen. Zudem kann eine Wärmemenge von ca. 1,1 MJ in den Warmwasserspeicher abgegeben werden. Wird anschließend die Wärmefreisetzung durchgeführt, kann nach dem Ausführungsbeispiel gemäß FIG 1 eine Wärmemenge von ca. 1,1 MJ auf hohem Temperaturniveau freigesetzt werden. Ist bei der Wärmefreisetzung vorteilhaft Abwärme verfügbar, wie beispielsweise gemäß FIG 2 und FIG 3, kann die Wärmemenge auf ca. 1,8 MJ gesteigert werden.

Im Weiteren sei auf die Vorteile des beschriebenen thermo-chemischen Wärmespeichers und dem Verfahren zur Betreibung dieses Speichers eingegangen. Insgesamt sei angemerkt, dass für das beschriebene Verfahren größtenteils ungefährliche Substanzen wie Oxide, Hydroxide, Luft und Wasser verwendet werden, die auch kostengünstig hergestellt werden können. Diese Substanzen können als Schüttgut verwendet werden. Dies kann in großen Mengen gelagert werden. Durch Behandlungsmethoden, beispielsweise wie Pelletierung, also die Herstellung von Pellets, kann ein standardisiertes gut förderbares Gut verwendet werden. Die Speicherleistung wird vom Energieinhalt entkoppelt. Es sind relativ kleine Einspeicher- und Ausspeichereinheiten, d.h. insbesondere die Etagenöfen 8 möglich und gleichzeitig kann ein großer Energieinhalt als Feststoffschüttung gelagert werden. Die hohe Energiedichte erlaubt auch den effizienten Transport des Speichermaterials und damit die Möglichkeit eines mobilen Wärmespeichers bzw. der räumlichen Trennung von Speichermaterial und Entladestation bzw. der räumlichen Trennung von Ladeprozess und Entladeprozess. Die Aufnahme und Abgabe von Wärme erfolgt sehr emissionsarm. Es wird lediglich Wasser aufgenommen oder abgegeben. Eine mögliche Freisetzung von Staub kann durch Filter vermieden werden. Schwefel-, Chlor-, Stickstoff- und sonstige Verbindungen, die aus Verbrennungsprozessen zur Wärmeerzeugung bekannt sind, werden in diesem Prozess nicht freigesetzt. Die Wärmefreisetzung ist daher auch an Orten mit hohen Anforderungen an die Luftqualität oder in geschlossenen Räumen möglich. Das beschriebene Verfahren ist aufgrund seiner Modularität in verschiedenen baulichen Dimensionen darstellbar. Es kann einerseits zur Zwischenspeicherung von Energie in Einfamilienhäusern oder Wohnblöcken genutzt werden, andererseits kann es als große Energiespeicher neben einem Kraftwerk Anwendung finden.

## Patentansprüche

1. Verfahren zum Betreiben eines Energiespeichers (2), umfassend folgende Schritte:
- Einbringen eines Speichermaterials (4), das als Edukt mit Wasser (6) eine exotherme Reaktion eingeht in einen Etagenofen (8), der mehrere Etagen aufweist,
- Einbringen von Luft (7) und Wasser (6) in den Etagenofen (8),
- wobei das Speichermaterial (4) im Etagenofen (8) über die Etagen, die rotieren, mit der Luft (7) im Gegenstrom geführt wird und die exotherme Reaktion zwischen Speichermaterial (4) und Wasser (6) zu einem Produkt (10) erfolgt, wobei das Produkt wieder aus dem Etagenofen entnommen wird,
- Erhitzen der Luft (7) durch Energie, die bei der exothermen Reaktion zwischen dem Speichermaterial (4) und dem Wasser (6) frei wird,
- Einleiten der erhitzen Luft (7') in einen Wärmeübertrager (12) wobei
- durch die im Wärmeübertrager (12) übertragene Wärme ein Arbeitsmedium (13, 14) erhitzt wird.

2. Verfahren nach Anspruch 1, **dadurch gekennzeichnet, dass** durch das Arbeitsmedium (13) Dampf (14) erzeugt wird, durch den eine Turbine zur Stromerzeugung betrieben wird.

3. Verfahren nach Anspruch 1 oder 2, **dadurch gekennzeichnet, dass** durch den Wärmeübertrager (12) Wasserdampf (15) erzeugt wird, der teilweise wieder in den Etagenofen (8) eingeführt wird.

4. Verfahren nach einem der Ansprüche 1 bis 3, **dadurch gekennzeichnet, dass** die Luft (7) in einem Sättiger (18) mit Wasser (6) angereichert wird.

5. Verfahren nach einem der Ansprüche 1 bis 4, **dadurch gekennzeichnet, dass** Wasser (6) durch Abwärme aus einem thermischen Prozess erwärmt wird und in den Etagenofen (8) eingeführt wird.

6. Verfahren nach einem der Ansprüche 1 bis 5, **dadurch gekennzeichnet, dass** feuchtes Abgas (19) aus einem hydrothermischen Prozess in den Etagenofen (8) eingeleitet wird.

7. Verfahren nach Anspruch 6, **dadurch gekennzeichnet, dass** das feuchte Abgas Abluft (19) eines Kühlturms ist.

8. Verfahren nach einem der Ansprüche 1 bis 7, **dadurch gekennzeichnet, dass** die Luft (7) nach dem Abgeben von thermischer Energie im Wärmeübertrager (12) erneut dem Etagenofen (8) zugeführt wird.

9. Verfahren nach einem der Ansprüche 1 bis 8, **dadurch gekennzeichnet, dass** das Produkt (10) auf ein Temperaturniveau erhitzt wird, auf dem eine Rückreaktion zum Edukt unter Abspaltung von Wasser (6) erfolgt.

10. Verfahren nach Anspruch 9, **dadurch gekennzeichnet, dass** zum Aufheizen des Produktes (10) ein Abgasstrom (21) aus einem thermischen Kraftwerk (2) verwendet wird, wobei dieser mit Wasser (6) angereichert wird.

11. Verfahren nach Anspruch 10, **dadurch gekennzeichnet, dass** der mit Wasser angereicherte Abgasstrom (21) in einen Dampferzeuger (22) des thermischen Kraftwerks (20) eingeleitet wird.

12. Verfahren nach Anspruch 11, **dadurch gekennzeichnet, dass** das Erhitzen des Produkts (8) durch eine Widerstandsbeheizung (24) mit elektrischem Strom erfolgt.

13. Verfahren nach einem der vorhergehenden Ansprüche, **dadurch gekennzeichnet, dass** das Speichermaterial (4) CaO, CaCO3, MgO, CaMg(CO3)2 und/oder Oxide des Eisens, Kupfers, Bariums, Natriums, Kaliums und Nickels enthält.

## Claims

1. Method for operating an energy store (2), comprising the following steps:
introducing a storage material (4) into a multi-level furnace (8), which has multiple levels, said storage material, as a starting material, undergoing an exothermic reaction with water (6),
- introducing air (7) and water (6) into the multi-level furnace (8),
- wherein, in the multi-level furnace (8), the storage material (4) is conducted via the levels, which rotate, in a counterflow configuration in relation to the air (7), and the exothermic reaction between storage material (4) and water (6) to form a product (10) is realized, wherein the product is removed again from the multi-level furnace,
- heating the air (7) by energy which is released during the exothermic reaction between the storage material (4) and the water (6),
- introducing the heated air (7') into a heat exchanger (12), wherein
- a working medium (13, 14) is heated by the heat transmitted in the heat exchanger (12).

2. Method according to Claim 1, **characterized in that** vapour (14) is generated by the working medium (13) and is used to operate a turbine for generating electricity.

3. Method according to Claim 1 or 2, **characterized in that** water vapour (15) is generated by the heat exchanger (12) and is partially introduced again into the multi-level furnace (8).

4. Method according to one of Claims 1 to 3, **characterized in that** the air (7) is enriched with water (6) in a saturator (18).

5. Method according to one of Claims 1 to 4, **characterized in that** water (6) is heated by waste heat from a thermal process and is introduced into the multi-level furnace (8) .

6. Method according to one of Claims 1 to 5, **characterized in that** moist waste gas (19) from a hydrothermal process is introduced into the multi-level furnace (8).

7. Method according to Claim 6, **characterized in that** the moist waste gas is waste air (19) of a cooling tower.

8. Method according to one of Claims 1 to 7, **characterized in that**, following the output of thermal energy in the heat exchanger (12), the air (7) is supplied to the multi-level furnace (8) again.

9. Method according to one of Claims 1 to 8, **characterized in that** the product (10) is heated to a temperature level at which a reverse reaction to give the starting material with elimination of water (6) is realized.

10. Method according to Claim 9, **characterized in that** a waste-gas stream (21) from a thermal power plant (2) is used for heating the product (10), wherein said stream is enriched with water (6).

11. Method according to Claim 10, **characterized in that** the waste-gas stream (21) enriched with water is introduced into a vapour generator (22) of the thermal power plant (20) .

12. Method according to Claim 11, **characterized in that** the product (8) is heated by electric current by way of a resistance heating means (24).

13. Method according to one of the preceding claims, **characterized in that** the storage material (4) contains CaO, CaCO3, MgO, CaMg(CO3)2 and/or oxides of iron, copper, barium, sodium, potassium and nickel.

## Revendications

1. Procédé pour faire fonctionner un accumulateur (2) d'énergie, comprenant les stades suivants :
- on met une matière (4) d'accumulateur, qui, sous forme d'éduit, entre dans une réaction exothermique avec de l'eau (6), dans un four (8) à étages, qui a plusieurs étages,
- on introduit de l'air (7) et de l'eau (6) dans le four (8) à étages,
- dans lequel on fait passer la matière (4) d'accumulateur dans le four (8) à étages sur les étages, qui tournent, à contre-courant de l'air (7) et la réaction exothermique entre la matière (4) d'accumulateur et l'eau (6) donne un produit (10), le produit étant retiré du four à étages,
- on chauffe l'air (7) par de l'énergie libérée dans la réaction exothermique entre la matière (4) d'accumulateur et l'eau (6),
- on envoie l'air (7') chauffé dans un échangeur de chaleur (12), dans lequel
- on chauffe un fluide (13, 14) de travail par la chaleur échangée dans l'échangeur de chaleur (12).

2. Procédé suivant la revendication 1, **caractérisé en ce que** l'on produit, par le fluide (13) de travail, de la vapeur (14), par laquelle on fait fonctionner une turbine pour produire du courant.

3. Procédé suivant la revendication 1 ou 2, **caractérisé en ce que** l'on produit, par l'échangeur de chaleur (12), de la vapeur (15) d'eau, que l'on envoie, au moins en partie, au four (8) à étage.

4. Procédé suivant l'une des revendications 1 à 3, **caractérisé en ce que** l'on enrichit l'air (7) en eau (6) dans un saturateur (18).

5. Procédé suivant l'une des revendications 1 à 4, **caractérisé en ce que** l'on réchauffe de l'eau (6) par de la chaleur perdue provenant d'un processus thermique et on l'envoie dans le four (8) à étage.

6. Procédé suivant l'une des revendications 1 à 5, **caractérisé en ce que** l'on envoie l'effluent (19) gazeux humide d'un processus hydrothermique dans le four (8) à étage.

7. Procédé suivant la revendication 6, **caractérisé en ce que** l'effluent gazeux humide est de l'air (19) d'échappement d'une tour de refroidissement.

8. Procédé suivant l'une des revendications 1 à 7, **caractérisé en ce que** l'on renvoie l'air au four (8) à étage après qu'il a cédé de l'énergie thermique dans l'échangeur de chaleur (12).

9. Procédé suivant l'une des revendications 1 à 8, **caractérisé en ce que** l'on porte le produit (10) à un niveau de température où s'effectue une réaction en retour vers l'aiguille avec séparation d'eau (6).

10. Procédé suivant la revendication 9, **caractérisé en ce que** pour chauffer le produit (10), on utilise l'effluent (21) gazeux d'une centrale (2) thermique, celui-ci étant enrichi en eau (6).

11. Procédé suivant la revendication 10, **caractérisé en ce que** l'on envoie l'effluent (21) gazeux enrichi en eau dans un générateur de vapeur (22) de la centrale (20) thermique.

12. Procédé suivant la revendication 11, **caractérisé en ce que** le chauffage du produit (8) s'effectue par un chauffage (24) par résistance par du courant électrique.

13. Procédé suivant l'une des revendications précédentes, **caractérisé en ce que** la matière (4) d'accumulateur contient du CaO, du CaCO3, du MgO, du CaMg(CO3)2 et/ou des oxydes du fer, du cuivre, du baryum, du sodium, du potassium et du nickel.
